(19) Europäisches Patentamt
European Patent Office
Office européen des brevets

(11) **EP 4 080 838 A1**

(12) **EUROPEAN PATENT APPLICATION**
published in accordance with Art. 153(4) EPC

(43) Date of publication:
**26.10.2022 Bulletin 2022/43**

(21) Application number: **20915453.3**

(22) Date of filing: **30.09.2020**

(51) International Patent Classification (IPC):
***H04L 12/741*** **(2013.01)**

(52) Cooperative Patent Classification (CPC):
**H04L 41/00; H04L 43/00; H04L 45/16; H04L 45/54**

(86) International application number:
**PCT/CN2020/119667**

(87) International publication number:
**WO 2021/147377 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.01.2020 CN 202010075317**

(71) Applicant: **Huawei Technologies Co., Ltd.
Shenzhen, Guangdong 518129 (CN)**

(72) Inventor: **LIU, Shuying
Shenzhen, Guangdong 518129 (CN)**

(74) Representative: **Maiwald Patent- und
Rechtsanwaltsgesellschaft mbH
Engineering
Elisenhof
Elisenstrasse 3
80335 München (DE)**

(54) **MULTICAST PACKET DETECTION METHOD, NETWORK DEVICE, AND SYSTEM**

(57) Embodiments of this application disclose a multicast packet detection method, a network device, and a system, to improve detection deployment efficiency, reduce occupation of management bandwidth resources, and improve network management performance. The method includes: obtaining, by a network device, a first bit index explicit replication BIER packet, where the first BIER packet includes a first identifier, and the first identifier is used to indicate to detect the first BIER packet; detecting, by the network device, the first BIER packet based on the first identifier, to obtain detection data; and sending, by the network device, the detection data to a controller.

FIG. 2

**Description**

This application claims priority to Chinese Patent Application No. 202010075317.7, filed with the China National Intellectual Property Administration on January 22, 2020 and entitled "MULTICAST PACKET DETECTION METHOD, NETWORK DEVICE, AND SYSTEM", which is incorporated herein by reference in its entirety.

**TECHNICAL FIELD**

This application relates to the communications field, and in particular, to a multicast packet detection method, a network device, and a system.

**BACKGROUND**

Multicast is a method of communication between a sender and a plurality of receivers on a network. A multicast technology not only can be applied to point-to-multipoint application scenarios, such as media broadcast, event notification, status monitoring, data collection, and network auction, but also can be applied to multipoint-to-multipoint application scenarios, such as a multipoint conference and database synchronization. Therefore, many developers attach great importance to the multicast technology.

A bit index explicit replication (bit indexed explicit replication, BIER) technology is a type of multicast technology, and is used to construct a multicast forwarding path, which not only meets a service requirement of a fast increasing quantity of multicast packets, but also reduces operation costs. To ensure transmission quality of BIER multicast packets, the BIER multicast packets need to be detected. In a conventional detection manner, a detection instruction is delivered to each network device that transmits a BIER multicast packet, and each network device detects the BIER multicast packet according to the detection instruction. In this manner, relatively low detection deployment efficiency is caused, a relatively large quantity of management bandwidth resources are occupied, and network management performance is affected.

**SUMMARY**

Embodiments of this application provide a multicast packet detection method, a network device, and a system, to improve detection deployment efficiency, reduce occupation of management bandwidth resources, and improve network management performance.

According to a first aspect, an embodiment of this application provides a multicast packet detection method. The method includes: A network device obtains a first BIER packet. The first BIER packet includes a first identifier. The first identifier is used to indicate to detect the first BIER packet. Next, the network device detects the first BIER packet based on the first identifier, to obtain detection data. Finally, the network device sends the detection data to a controller. The multicast packet detection method may be performed by the network device, and the network device may be an ingress node, a transit node, or an egress node.

A description is further provided. First, the controller sends a detection instruction to the ingress node, where the detection instruction includes a multicast flow identifier, and the multicast flow identifier is used to identify a BIER multicast flow. The detection instruction is used to instruct the ingress node to include the first identifier in a second BIER packet corresponding to the multicast flow identifier. After receiving the detection instruction from the controller, the ingress node includes the first identifier in the second BIER packet according to the detection instruction, to obtain the first BIER packet. Then, the ingress node sends the first BIER packet. In addition, the transit node or the egress node that receives the first BIER packet may detect the first BIER packet based on the first identifier in the first BIER packet, to obtain the detection data, and send the detection data to the controller. In this process, the controller does not need to send a detection instruction to the transit node and the egress node. Compared with a conventional solution in which a controller needs to deliver a detection instruction to each network device that transmits a BIER packet, on the premise of detecting the first BIER packet, this application improves detection deployment efficiency, reduces occupation of management bandwidth resources, and improves network management performance. Certainly, alternatively, the ingress node may detect the first BIER packet based on the first identifier in the first BIER packet, to obtain detection data, and sends the detection data to the controller.

In some examples, the detection instruction may not be delivered by the controller, but may be directly configured on the ingress node, or may be sent by another device to the ingress node. This is not specifically limited in this application.

Optionally, when the network device is the ingress node, the first BIER packet includes the multicast flow identifier.

Correspondingly, the method further includes the following steps: The ingress node receives the detection instruction from the controller, where the detection instruction includes the multicast flow identifier, and the detection instruction is used to instruct the ingress node to include the first identifier in the second BIER packet corresponding to the multicast flow identifier. The ingress node includes the first identifier in the second BIER packet according to the detection instruction, to obtain the first BIER packet.

Optionally, after the ingress node receives the detection instruction from the controller, the method further includes: The ingress node generates a first correspondence. The first correspondence is a correspondence between the multicast flow identifier and first indication information. The first indication information is used to indicate to include the first identifier in the second BIER packet. Correspondingly, that the ingress node includes the first identifier in the second BIER packet according to the detection instruction, to obtain the first BIER packet specifically includes: First, the ingress node obtains the second BIER packet. Second, the ingress node obtains the first indication information based on the multicast flow identifier of the second BIER packet and the first correspondence. Finally, the ingress node includes the first identifier in the second BIER packet based on the first indication information, to obtain the first BIER packet. It should be noted that the first indication information may be generated by the ingress node according to the detection instruction or may be carried in the detection instruction. For example, the first indication information may be carried in a field of the detection instruction.

Optionally, when a BIER packet corresponding to the first correspondence does not need to be detected, the method further includes: The ingress node receives a cancellation instruction from the controller. The cancellation instruction includes the multicast flow identifier. The ingress node deletes, according to the cancellation instruction, the first correspondence corresponding to the multicast flow identifier. In this way, the ingress node does not include the first identifier in the BIER packet corresponding to the multicast flow identifier in the first correspondence, and the ingress node, the transit node, and the egress node do not need to detect the BIER packet corresponding to the multicast flow identifier. Because the controller needs to deliver the cancellation instruction to only the ingress node, compared with a conventional solution in which a controller needs to deliver a cancellation instruction to each network device that transmits a BIER packet, on the premise of implementing detection cancellation for the BIER packet, this application improves detection cancellation deployment efficiency, reduces occupation of management bandwidth resources, and improves network management performance.

Optionally, that the network device detects the first BIER packet based on the first identifier includes: The network device obtains, based on the first identifier, information about an interface for transmitting the first BIER packet, for example, including at least one of information about an inbound interface and information about an outbound interface of the first BIER packet. The network device sends the information about the interface to the controller. The information about the interface of the first BIER packet is sent to the controller, so that the controller can obtain a forwarding path of the first BIER packet.

Optionally, the first BIER packet further includes a sequence number. That the network device detects the first BIER packet based on the first identifier includes: The network device obtains the sequence number of the first BIER packet based on the first identifier. The network device obtains, based on the sequence number, packet loss information or sequence error information of a multicast flow to which the first BIER packet belongs. In this way, a packet loss status and a sequence error status of the multicast flow to which the first BIER packet belongs are detected.

Certainly, it may be understood that the network device may alternatively directly send the sequence number of the first BIER packet to the network device. The controller obtains, based on the sequence number, packet loss information or sequence error information of a multicast flow to which the first BIER packet belongs. In this way, a packet loss status and a sequence error status of the multicast flow to which the first BIER packet belongs may also be detected.

Optionally, the first identifier is carried in a first field of the first BIER packet, and the first field may be, for example, an operation, administration, and maintenance field or a reserved field.

Optionally, the first BIER packet further includes a second field, a value of the second field indicates that the first field carries the first identifier, and the second field is, for example, a protocol field or a version field. The method further includes: The network device obtains the first identifier in the first field based on the value of the second field.

Optionally, to improve detection efficiency, the method further includes: The network device obtains characteristic information of the first BIER packet based on the first identifier. The characteristic information is, for example, triplet information or quintuplet information. The network device generates a third correspondence based on the characteristic information of the first BIER packet. The third correspondence is a correspondence between the characteristic information and second indication information. The second indication information is used to indicate to detect a BIER multicast packet corresponding to the characteristic information. Correspondingly, after the network device obtains a third BIER packet, the network device obtains the second indication information based on characteristic information of the third BIER packet and the third correspondence. Then, the network device detects the third BIER packet based on the second indication information. Because efficiency of obtaining the characteristic information from the BIER packet by the network device is higher than efficiency of obtaining the first identifier, detection efficiency of the BIER packet can be improved.

Optionally, in some application scenarios, the network device may receive BIER packets that are from egress nodes belonging to different set identifiers but that have same content. To accurately detect the BIER packet, that the network device detects the first BIER packet based on the first identifier includes: The network device obtains a bit index forwarding table identifier BIFT ID of the first BIER packet. The network device obtains, based on the BIFT ID of the first BIER packet and a second correspondence, a set identifier corresponding to the first BIER packet. The set identifier is an identifier of a set to which an egress node corresponding to the first BIER packet belongs. The second correspondence is a correspondence between the bit index forwarding table identifier and the set identifier. The network device detects the first BIER packet based on the first identifier and the set identifier corresponding to the first BIER packet.

Optionally, in some application scenarios, the network device may receive BIER packets that are from different ingress nodes but have same content. To accurately detect the BIER packet, that the network device detects the first BIER packet based on the first identifier includes: The network device obtains an identifier of an ingress node corresponding to the first BIER packet. The network device detects the first BIER packet based on the first identifier and the identifier of the ingress node.

According to a second aspect, an embodiment of this application provides a network device, configured to perform the method in any one of the first aspect or the possible implementations of the first aspect. Specifically, the network device includes units configured to perform the method in any one of the first aspect or the possible implementations of the first aspect.

According to a third aspect, an embodiment of this application provides a network device. The controller includes a processor, a communications interface, and a memory. The memory may be configured to store program code. The processor is configured to invoke the program code in the memory to perform the method in any one of the first aspect or the possible implementations of the first aspect. For details, refer to the detailed descriptions in the method examples. Details are not described herein again.

According to a fourth aspect, an embodiment of this application provides a multicast packet detection system. The system includes a network device and a controller. The network device is configured to obtain a first bit index explicit replication BIER packet. The first BIER packet includes a first identifier. The first identifier is used to indicate to detect the first BIER packet. The network device is further configured to: detect the first BIER packet based on the first identifier, to obtain detection data, and send the detection data to the controller. The controller is configured to: receive the detection data, and perform processing based on the detection data.

According to a fifth aspect, an embodiment of this application provides a computer-readable medium, including instructions. When the instructions are executed on a computer, the computer is enabled to perform the method in any one of the first aspect or the possible implementations of the first aspect.

## BRIEF DESCRIPTION OF DRAWINGS

FIG. 1 is a schematic structural diagram of a multicast packet detection system according to an embodiment of this application;

FIG. 2 is a flowchart of a multicast packet detection method according to an embodiment of this application;

FIG. 3 is a schematic diagram of a format of a packet header of a BIER packet S2 according to an embodiment of this application;

FIG. 4 is a schematic diagram of a format of a new-version BIER packet header according to an embodiment of this application;

FIG. 5 is a schematic architectural diagram of a BIER multicast system according to an embodiment of this application;

FIG. 6A and FIG. 6B are another flowchart of a multicast packet detection method according to an embodiment of this application;

FIG. 7 is a schematic structural diagram of a network device 700 according to an embodiment of this application;

FIG. 8 is a schematic structural diagram of a network device 800 according to an embodiment of this application; and

FIG. 9 is a schematic structural diagram of a multicast packet detection system 900 according to an embodiment of this application.

## DESCRIPTION OF EMBODIMENTS

Embodiments of this application provide a multicast packet detection method, a network device, and a system, to reduce occupation of management bandwidth resources and improve detection deployment efficiency in a process of detecting a BIER multicast packet.

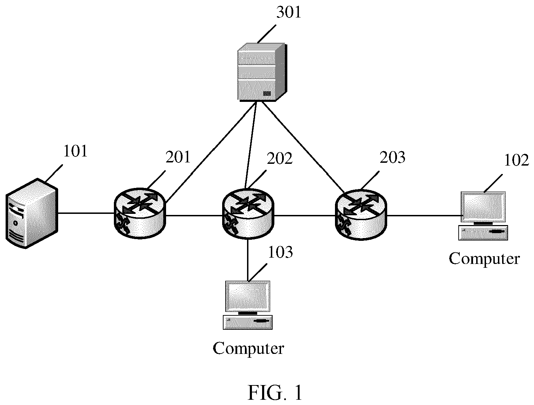

For ease of understanding, an application scenario of the embodiments of this application is first described with reference to FIG. 1.

FIG. 1 is a schematic structural diagram of a multicast packet detection system according to an embodiment of this application. In FIG. 1, the multicast packet detection system provided in this embodiment of this application includes a server 101, a terminal device 102, a terminal device 103, a network device 201, a network device 202, a network device 203, and a controller 301. The server 101 is connected to the network device 201, the network device 201 is connected to the network device 202, the network device 202 is connected to the network device 203, the network device 203 is connected to the terminal device 102, the terminal device 103 is connected to the network device 202, and the controller 301 is connected to the network device 201, the network device 202, and the network device 203.

In this embodiment of this application, the server 101 may be configured to, for example, generate a video stream, an image stream, and the like.

The terminal device 102 and the terminal device 103 are also referred to as user equipment (user equipment, UE), a mobile station (mobile station, MS), a mobile terminal (mobile terminal, MT), a terminal, or the like, and are devices that provide voice and/or data connectivity for a user, or chips disposed in the devices, for example, handheld devices or vehicle-mounted devices that have a wireless connection function and that is allowed. Currently, some examples of the terminal device are: a set top box (Set Top Box, STB), a mobile phone (mobile phone), a tablet, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

The controller 301 may be, for example, a device such as a network control engine (Network Control Engine, NCE) internet protocol (Internet Protocol, IP) server.

In this embodiment of this application, the network device 201, the network device 202, and the network device 203 may be, for example, network communication devices such as routers and switches. When the network device is a router, the network device may be referred to as a bit-forwarding router (bit-forwarding router, BFR).

In this embodiment of this application, the network device 201 to the network device 203 together form a BIER multicast domain (BIER domain). The BIER multicast domain is a domain in which a BIER packet is forwarded. An edge network device (the network device 201) connected to a multicast source network device (for example, the server 101 in FIG. 1) in the BIER multicast domain may be a bit-forwarding ingress router (bit-forwarding ingress router, BFIR), and an edge network device (for example, the network device 203) connected to a terminal device (for example, the terminal device 101 in FIG. 1) may be a bit-forwarding egress router (bit-forwarding egress router, BFER).

If a conventional technology is used, the controller 301 first obtains a transmission path of a specific multicast packet. For example, after converting a data flow from the server 101 into the specific BIER multicast packet, the network device 201 sends the specific multicast packet to the terminal device 102 through the network device 202 and the network device 203 in sequence. Therefore, the packet transmission path of the specific BIER multicast packet is from the network device 201, to the network device 202, and then to the network device 203. In this case, the controller 301 may deliver a detection instruction to each of the network device 201, the network device 202, and the network device 203. The detection instruction is used to instruct to detect the specific BIER multicast packet. It can be learned that the controller needs to deliver a quantity of detection instructions that is the same as a quantity of network devices that need to detect the specific BIER multicast packet. Consequently, a relatively large quantity of management bandwidth resources are occupied. In addition, one detection instruction is used to indicate only one BIER multicast packet. Therefore, when there are a relatively large quantity of BIER multicast packets that need to be detected, the controller needs to deliver a plurality of detection instructions to each network device. Consequently, detection deployment efficiency is relatively low, and a large quantity of management bandwidth resources are occupied, affecting network performance. When the network device cancels detection on a BIER multicast packet, in the conventional technology, the controller 301 needs to send a cancellation instruction to each network device. Consequently, cancellation deployment efficiency is relatively low, and a large quantity of management bandwidth resources are occupied, affecting network performance.

However, in this embodiment of this application, the controller 301 may send a detection instruction to an ingress node of the BIER multicast domain, for example, the network device 201. After receiving the detection instruction, the ingress node includes a first identifier in the BIER multicast packet. The first identifier is used to indicate the network device that transmits the BIER multicast packet to detect the BIER multicast packet. The network device that transmits the BIER multicast packet may detect the BIER multicast packet based on the first identifier. In other words, the controller 301 needs to send a flow-based detection instruction to only the ingress node, and does not need to deliver the detection instruction to another network device that transmits the BIER multicast packet. This improves detection deployment efficiency, saves network management bandwidth resources, and improves network management performance.

When the network device 201, the network device 202, and the network device 203 need to cancel detection on the BIER multicast packet, the controller 301 needs to send a cancellation instruction to only the ingress node. After receiving the cancellation instruction, the ingress node may stop including the first identifier in the BIER multicast packet. In this way, the network device 201, the network device 202, and the network device 203 do not need to detect the BIER multicast packet. This improves detection cancellation deployment efficiency while implementing detection cancellation, saves network management bandwidth resources, and improves network management performance.

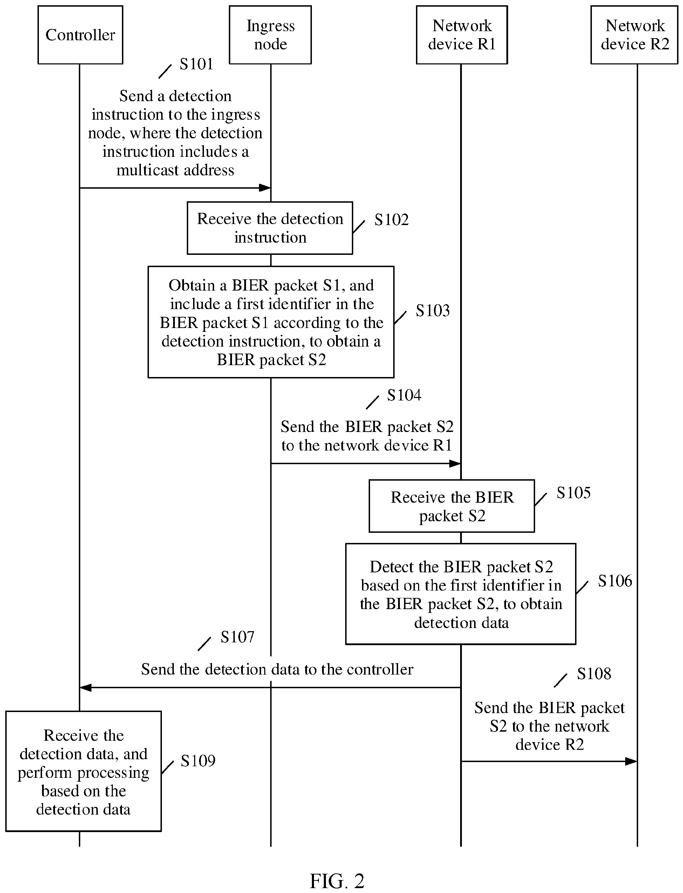

FIG. 2 is a flowchart of a multicast packet detection method according to an embodiment of this application.

The following describes, with reference to FIG. 2 and FIG. 1, the multicast packet detection method provided in this embodiment of this application.

S101: A controller sends a detection instruction to an ingress node.

In this embodiment of this application, the controller may be, for example, the controller 301 in FIG. 1, and the ingress node is, for example, the network device 201 in FIG. 1.

In this embodiment of this application, the detection instruction may carry a multicast flow identifier that is used to identify a multicast flow to which a BIER multicast packet belongs. In different application scenarios, the multicast flow identifier may have different possible implementations.

When the method provided in this embodiment of this application is applied to BIER in the IPv4 or BIER in the IPv6, in one of possible implementations, the multicast flow identifier may be a multicast address, and the multicast address includes a multicast source address (source address) and a multicast group address (group address). Optionally, the multicast flow identifier may further include a virtual private network (Virtual Private Network, VPN) identifier or the like. The BIER packet may be identified by using a multicast address, a VPN, or a combination of a multicast address and a VPN. This is not specifically limited in this embodiment of this application. Optionally, the multicast flow identifier may further include at least one or more of information such as a bit string length (bit string length, BSL), a sub-domain identifier (sub-domain identifier, sub-domain ID), and a set identifier (set identifier, set ID).

When the method provided in this embodiment of this application is applied to BIER in the IPv4, in another possible implementation, the multicast flow identifier may alternatively be an entropy label (entropy label), and the entropy label may vary in constraints of different VPNs, multicast source addresses, multicast group addresses, BSLs, sub-domain IDs, or set IDs. If the entropy label cannot meet the foregoing requirement and does not vary in the foregoing constraints, the entropy label needs to be used together with one or more of the VPN, the multicast source address, the multicast group address, the BSL, the sub-domain ID, and the set ID to uniquely identify a multicast flow.

When the method provided in this embodiment of this application is applied to BIER in the IPv6, in another possible implementation, the multicast flow identifier may alternatively be a flow label (flow label), and the flow label may vary in different VPNs, multicast source addresses, multicast group addresses, BSLs, sub-domain IDs, or set IDs. If the flow label cannot meet the foregoing requirement and does not vary in the foregoing constraints, the flow label needs to be used together with one or more of the VPN, the multicast source address, the multicast group address, the BSL, the sub-domain ID, and the set ID to uniquely identify a multicast flow.

The foregoing possible implementations do not constitute a limitation on the multicast flow identifier, and a person skilled in the art may design another implementation based on an actual situation.

For ease of description, the following uses the multicast address as an example to identify information about the multicast flow to which the BIER multicast packet belongs.

In this embodiment of this application, the detection instruction is used to instruct the ingress node to include a first identifier in the BIER packet corresponding to the multicast address, and the first identifier is used to indicate to detect the BIER packet. In this embodiment of this application, BIER packet detection may be detecting a multicast flow to which a BIER packet belongs. Specific content of the detection is, for example, packet loss information, sequence error information, delay information, jitter information, and topology information. This is not specifically limited in this embodiment of this application.

In this embodiment of this application, if there are a plurality of multicast flows that need to be detected, the detection instruction delivered by the controller to the ingress node may carry a plurality of multicast addresses, or a plurality of detection instructions may be delivered, where each detection instruction carries a group of multicast addresses. This is not specifically limited in this embodiment of this application.

Optionally, the controller may further send another detection parameter to a device that needs to perform detection, for example, the ingress node and a network device R1. The detection parameter may be, for example, a detection periodicity or a threshold. The detection periodicity is a periodicity for detecting the BIER packet. The threshold is used to determine whether a jitter, a delay, or the like occurs in the multicast flow.

S102: The ingress node receives the detection instruction.

In this embodiment of this application, after receiving the detection instruction, the ingress node may generate and store a correspondence M1, where the correspondence M1 is a correspondence between first indication information and the multicast address in the detection instruction. The first indication information is used to indicate the ingress node to include the first identifier in the BIER packet corresponding to the multicast address. It should be noted that the first indication information may be generated by the ingress node according to the detection instruction, or may be extracted by the ingress node from the detection instruction. In other words, the first indication information may be carried in a field in the detection instruction.

If a plurality of multicast flows need to be detected, the ingress node may generate a multicast address list corresponding to the indication information, where the list includes multicast addresses of the plurality of multicast flows that need to be detected.

Referring to Table 1, Table 1 is an example of a multicast address list created by the ingress node and corresponding to the first indication information.

Table 1

| Multicast source address | Multicast group address |
|---|---|
| S1 | G1 |
| S1 | G2 |
| S2 | G3 |

S103: The ingress node obtains a BIER packet S1, and includes the first identifier in the BIER packet S1 according to the detection instruction, to obtain a BIER packet S2.

In this embodiment of this application, the BIER packet S1 carries a multicast address. When determining that the multicast address in the BIER packet S1 matches the multicast address in the detection instruction, the ingress node includes the first identifier in the BIER packet S1. Specifically, the ingress node may obtain corresponding indication information based on the multicast address in the BIER packet S1 and the correspondence M1, and include the first identifier in the BIER packet S1 according to the indication information.

For example, assuming that the BIER packet S1 carries a multicast source address S1 and a multicast group address G1, it can be learned according to Table 1 that a BIER multicast packet corresponding to the BIER packet S1 needs to be detected. Therefore, the first identifier may be inserted into the BIER packet S1, to obtain a BIER packet S2.

In this embodiment of this application, the first identifier may be carried in a first field in the BIER packet S2. Specifically, the first field may be in a packet header of the BIER packet S2.

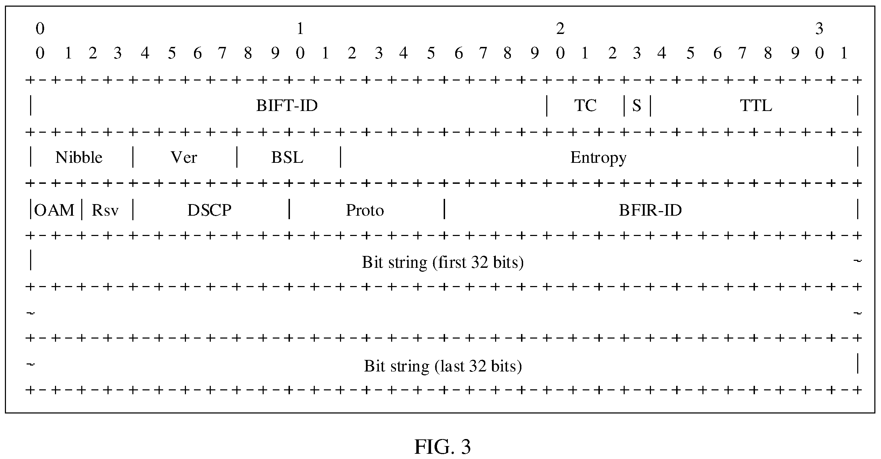

FIG. 3 is a schematic diagram of a format of a packet header of the BIER packet S2. In the figure, the packet header of the BIER packet S2 includes the following fields: a bit index forwarding table (Bit Index Forwarding Table, BIFT) identifier (identifier, ID) field, a traffic class (Traffic Class, TC) field, a stack bottom label flag S field, a time to live (Time To Live, TTL) field, a nibble (Nibble) field, a version (version, Ver) field, a bit string length (BitString Length) field, an entropy (Entropy) field, an operation, administration, and maintenance (Operation Administration and Maintenance, OAM) field, a reserved (Reserve, Rsv) field, a differentiated services code point (Differentiated Services Code Point, DSCP) field, a protocol (Protocol, Proto) field, a BFIR ID field, a bit string (BitString) field, and the like.

In a first possible implementation, the first identifier may be carried in the OAM field in the packet header of the BIER packet S2. For example, values of the OAM field may be 00, 01, 10, and 11. 00 may represent a default value, and one of 01, 10, and 11 may be used as the first identifier. For example, 01 is selected as the first identifier.

In a second possible implementation, the first identifier may be carried in the Rsv field in the packet header of the BIER packet S2. For example, values of the Rsv field may be 00, 01, 10, and 11. 00 may represent a default value, and one of 01, 10, and 11 may be used as the first identifier. For example, 01 is selected as the first identifier.

In the two implementations, the OAM field or the Rsv field that carries the first identifier is an original field in the packet header.

In this embodiment of this application, the first field carrying the first identifier may alternatively be a newly added field in the packet header. In this case, the BIER packet S2 may further include a second field, where a value of the second field indicates that the first field carries the first identifier.

In a third possible implementation, the first field may be a type length value (type length value, TLV) field (not shown in FIG. 3) in a BIER extension header. The second field may be a Proto field. A value (for example, 0x3F) of the Proto field is used to indicate that the TLV field in the BIER extension header carries the first identifier.

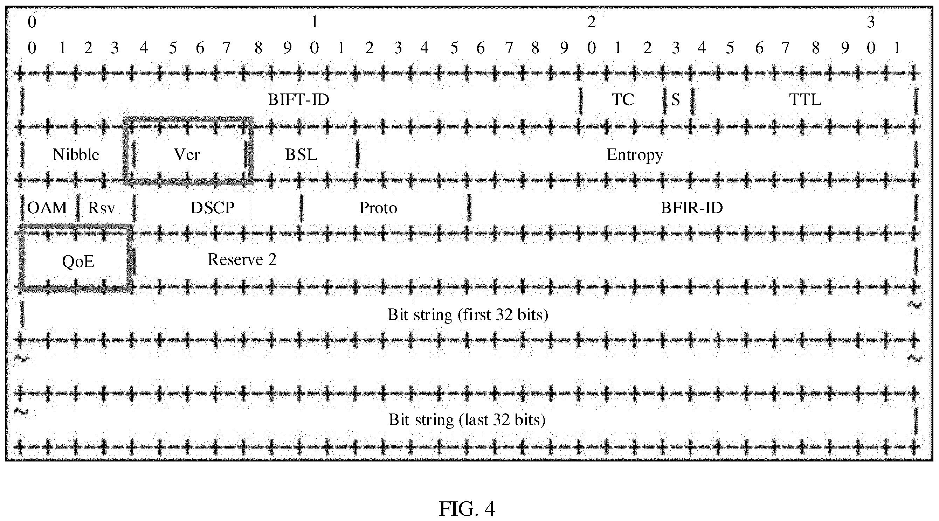

In a fourth possible implementation, the first field may be a newly added field in a new-version BIER packet header. FIG. 4 is a schematic diagram of a format of the new-version BIER packet header. In this figure, the newly added field is a quality of experience (Quality of Experience, QoE) field, and a value (for example, 0x01) of the QoE field may be the first identifier. The second field may be a Ver field. For example, when a value of the Ver field is 1, it indicates that the QoE field carries the first identifier.

It may be understood that the foregoing four implementations do not constitute a limitation on the technical solution of this application, and a person skilled in the art may design another implementation based on an actual situation.

S104: The ingress node sends the BIER packet S2 to a network device R1.

In this embodiment of this application, the network device R1 is, for example, the network device 202 in FIG. 1.

S105: The network device R1 receives the BIER packet S2.

S106: The network device R1 detects, based on the first identifier in the BIER packet S2, a BIER multicast packet to which the BIER packet S2 belongs, to obtain detection data.

In this embodiment of this application, after receiving the BIER packet S2, the network device R1 may read the first identifier carried in the first field of the BIER packet S2, and detect, based on the first identifier, the BIER multicast packet to which the BIER packet S2 belongs.

As mentioned above, specific content of the detection is, for example, packet loss information, sequence error information, delay information, jitter information, and topology information. In this embodiment of this application, the technical solution of this application is described by using an example in which packet loss information, sequence error information, jitter information, and topology information of the BIER multicast packet are detected.

In this embodiment of this application, the BIER packet S2 may include a sequence number (sequence number) field, and the sequence number field carries a sequence number of the BIER packet S2. Optionally, the sequence number field may be located in a real-time transport protocol (Real-time Transport Protocol, RTP) header of the BIER packet S2.

When the ingress node generates the 1st packet of a BIER multicast packet, a sequence number of the packet may be a random positive integer less than 65536. Each time a packet of the BIER multicast packet is generated subsequently, a corresponding sequence number is increased by 1 based on a sequence number of a previous packet. After the sequence number is added to 65535, the sequence number may be obtained by performing accumulation starting from 1.

It is assumed that a sequence number of a BIER packet currently received by the network device R1 is M, and a sequence number of a previous BIER packet received by the network device R1 is N. If M > N+1, it is considered that a packet loss occurs, and a quantity of lost packets is M - N. If M < N, a sequence error occurs, and the network device R1 may record a sequence error once.

The network device R1 may calculate a packet loss rate (loss rate, LR) based on statistics on a quantity of packet loss times. For details of a calculation method, refer to the following formula:

$$\text{LR} = \frac{losspktNum}{\exp ectedpktNum}$$

exp*ectedpktNum* is a total quantity of BIER packets expected to be received within a statistics periodicity. exp*ectedpktNum* is equal to a difference between a maximum sequence number and a minimum sequence number in the statistics periodicity. For the 1st statistics periodicity, the minimum sequence number is a minimum sequence number of BIER packets received by the network device R1 within the statistics periodicity, and for a subsequent statistics periodicity, the minimum sequence number is a maximum sequence number of a previous statistics periodicity plus 1. The maximum sequence number is a maximum sequence number of BIER packets received by the network device R1 within a statistics periodicity. *losspktNum* represents a quantity of lost packets of the network device R1 in the statistics periodicity.

The network device R1 may further calculate a sequence error rate (sequence error rate, SER) based on statistics on a quantity of sequence error times. For details of a calculation method, refer to the following formula:

$$\text{SER} = \frac{SequenceErrorpktNum}{expectedpktNum}$$

*SequenceErrorpktNum* is a quantity of sequence error times in a statistics periodicity. *expectedpktNum* represents a total quantity of BIER packets expected to be received within the statistics periodicity.

Certainly, detecting a sequence error status or a packet loss status of a multicast flow based on a sequence number in an RTP header of a BIER packet is not the only implementation. There are other implementations during actual application, and this is not specifically limited in this embodiment of this application. For example, if the BIER packet does not include an RTP header, but includes only a transport stream (Transport Stream, TS), the sequence error status and the packet loss status of the multicast flow may be detected based on a sequence number in a continuous counter of a TS header in the BIER packet. Because this manner is an existing manner, details are not described herein.

Optionally, the network device R1 may further obtain, for a plurality of times in a sampling periodicity, a quantity of bytes of BIER packets that include the first identifier and have a same multicast address, and obtain, based on the quantity of bytes, jitter information of a multicast flow corresponding to the multicast address.

For example, within a sampling periodicity of 10 seconds, the network device R1 collects, every second, a quantity of bytes of BIER packets that include the first identifier, whose multicast source addresses are each S1, and whose multicast group addresses are each G1, obtains a maximum value and a minimum value in quantities of bytes collected in the 10 times, and determines whether a difference between the maximum value and the minimum value is greater than or equal to the threshold. If the difference is greater than or equal to the threshold, it is determined that a jitter occurs in a multicast flow corresponding to S1 and G1.

Certainly, the network device R1 may alternatively report, to the controller, a quantity of bytes collected within a sampling periodicity, and the controller determines whether a jitter occurs in a multicast flow.

Optionally, the network device R1 may further obtain, based on the first identifier, information about an interface for transmitting the BIER packet S2, for example, including at least one of information about an interface for receiving the BIER packet S2 and information about an interface for sending the BIER packet S2.

In this embodiment of this application, the ingress node may alternatively obtain the detection data of the BIER packet S2 based on the first identifier, and send the detection data to the controller. For example, the ingress node obtains, based on the first identifier, the information about the interface for sending the BIER packet S2, and sends the information to the controller.

In addition, during actual application, the network device R1 may not need to: read the first identifier from a packet that belongs to a same BIER multicast flow each time the network device R1 receives the packet, and perform detection based on the first identifier. Therefore, optionally, when the BIER packet S2 is the first packet in the BIER multicast flow, characteristic information, for example, triplet information or quintuplet information, of the BIER packet S2 may be obtained based on the first identifier in the BIER multicast flow. Then, a correspondence M2 between the characteristic information and second indication information is generated. The triplet information includes a multicast address and a destination port of the BIER packet S2. The quintuplet information includes a source IP address, a destination IP address, a source port, a destination port, and a transport layer protocol that are of the BIER packet S2. The second indication information is used to indicate to detect the BIER multicast flow corresponding to the characteristic information. When subsequently receiving a BIER packet of the BIER multicast flow, for example, a BIER packet S3, the network device R1 may obtain the second indication information based on characteristic information of the BIER packet S3 and the correspondence M2, and detect the BIER packet S2 based on the second indication information. Because a time for matching the characteristic information with the correspondence M2 is shorter than a time for reading the first identifier from the packet, detection efficiency can be improved. For a specific detection manner, refer to the foregoing descriptions. Details are not described herein again.

In some application scenarios, to improve reliability, one server may be connected to a plurality of ingress nodes, that is, a same flow is forwarded by using the plurality of ingress nodes. Therefore, quintuplet information of BIER multicast packets sent by the plurality of ingress nodes may be the same, and these BIER multicast packets may pass through a same network device. Therefore, to enable the network device to distinguish between BIER packets from different ingress nodes, the network device R1 may distinguish between the BIER multicast packets from the different ingress nodes based on identifiers BFIR IDs of the ingress nodes in the BIER packets. In this way, the BIER multicast packets from the different ingress nodes are detected separately.

In addition, a bit string carried in the BIER packet indicates an egress node of the BIER packet. Because a size of a bit string that can be carried in one BIER packet is limited, if a BIER multicast packet to which the BIER packet belongs is sent to a relatively large quantity of egress nodes, and consequently, the quantity of all the egress nodes exceeds a quantity of egress nodes that can be represented by a bit string carried in one BIER packet, these egress nodes may be divided into a plurality of sets, and each set corresponds to one identifier. The identifier is referred to as a set identifier (set identifier, SI). The ingress node may separately send a same BIER multicast packet based on egress nodes corresponding to different SIs. Therefore, the network device R1 may receive a plurality of BIER packets that are from egress nodes belonging to different SIs but that have same quintuplet information. Because forwarding paths of these BIER packets are different, the network device R1 may distinguish between BIER packet flows corresponding to the plurality of BIER packets, to separately perform detection.

Specifically, as shown in FIG. 3, the BIER packet S2 may carry a BIFT ID, and the network device R1 may obtain a SI corresponding to the BIER packet S2 based on the BIFT ID in the BIER packet S2 and a pre-obtained correspondence M3, and then, detect the BIER multicast packet to which the BIER packet S2 belongs based on the SI. The correspondence M3 is a correspondence between the BIFT ID and the SI. The correspondence M3 may be delivered by the controller, or may be generated by the egress node itself and notified to another network device through flooding.

S107: The network device R1 sends the detection data to the controller.

S108: The network device R1 sends the BIER packet S2 to a network device R2.

In this embodiment of this application, the network device R2 may be, for example, the network device 203. After receiving the BIER packet S2 from the network device R1, the network device R2 performs a process similar to that performed by the network device R1, and details are not described herein again. If a forwarding path of the BIER packet S2 further includes another network device, the network device R2 may continue to send the BIER packet S2 to a next-hop network device until the BIER packet S2 is sent to a destination node. During actual application, actions of detecting the BIER packet S2 based on the first identifier in the BIER packet S2 and sending the detection data to the controller that are performed by a network device of network devices on the path for forwarding the BIER packet S2 may be enabled and configured in a corresponding network device in advance. A network device that is configured to be enabled to perform detection performs the foregoing detection process. A network device that is not configured to be enabled to perform detection may not perform the foregoing detection process.

In addition, there is no necessary sequence between S107 and S108, and S108 may be performed before, after, or at the same time as S107.

S109: The controller receives the detection data, and performs processing based on the detection data.

In this embodiment of this application, the controller may perform corresponding processing based on detection data sent by each network device.

For example, if the detection data received by the controller includes the information about the interface for transmitting the BIER packet S2, the controller may obtain the forwarding path of the BIER packet S2 based on the information about the interface for transmitting the BIER packet S2.

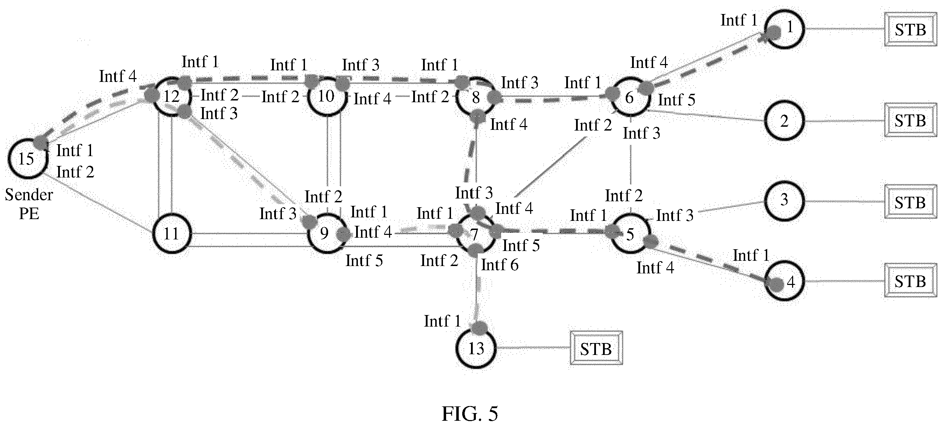

FIG. 5 is a schematic architectural diagram of a BIER multicast system.

In FIG. 5, a node 1 to a node 15 are network devices, where the node 15 is an ingress node of a BIER multicast domain, the nodes 1 to 4 and the node 13 are egress nodes of a BIER multicast source, and terminal devices connected to the nodes 1 to 4 and the node 13 are set-top boxes.

A BIER multicast flow 1 and a BIER multicast flow 2 are output through an interface (Interface, Intf) 1 of the node 15. The BIER multicast flow 1 is received through an Intf 4 of the node 12 and output through an Intf 1 of the node 12. The BIER multicast flow 1 is received through an Intf 1 of the node 10 and output through an Intf 3 of the node 10. The BIER multicast flow 1 enters the node 8 through an Intf 1 of the node 8, and is replicated in the node 8 to obtain a BIER multicast flow 1' and a BIER multicast flow 1", which are output through an Intf 3 and an Intf 4 of the node 8 respectively. The BIER multicast flow 1' enters the node 6 through an Intf 1 of the node 6, is output through an Intf 4 of the node 6, and is then received through an Intf 1 of the node 1. The node 1 transmits the BIER multicast flow 1' to a corresponding STB. The BIER multicast flow 1" is received by an Intf 3 of the node 7, output through an Intf 5 of the node 7, and then received by an Intf 1 of the node 5. The node 5 transmits the BIER multicast flow 1" to the node 4 through an Intf 4, and the node 4 sends the BIER multicast flow 1" received through an Intf 1 to a corresponding STB.

After being sent by the node 15, the BIER multicast flow 2 is received through an Intf 3 of the node 9. The node 9 sends the BIER multicast flow 2 to the node 7 through an Intf 4. The node 7 receives the BIER multicast flow 2 through an Intf 1, and sends the BIER multicast flow 2 to the node 13 through an Intf 6. The node 13 receives the BIER multicast flow 2 through an Intf 1 and sends the BIER multicast flow 2 to a corresponding STB.

Referring to Table 2, this table is an example of a packet loss rate and a sequence error rate of a BEIR multicast flow 1 of a forwarding path whose egress node is the node 1.

**Table** 2

| Interface of a node on a forwarding path | 15 (Intf 1) | 12 (Intf 4) | 12 (Intf 1) | 10 (Intf 1) | 10 (Intf 3) | 8 (Intf 1) | 8 (Intf 3) | 6 (Intf 1) | 6 (Intf 4) |
|---|---|---|---|---|---|---|---|---|---|
| Packet loss rate | 0 | 0 | 0 | 0 | 0 | 1.1 | 1.1 | 1.1 | 1.1 |
| Sequence error rate | 0 | 0 | 0 | 0 | 0 | 0 | 0 | 0.7 | 0.7 |

It can be learned from Table 2 that, no packet loss occurs when the BEIR multicast flow 1 leaves the node 10, but a packet loss occurs after the BEIR multicast flow 1 enters the node 8, and a packet loss rate is 1.1%, indicating that a packet loss may occur on the BEIR multicast flow 1 between the node 10 and the node 8. Subsequently, a link between the node 10 and the node 8 may be further checked.

It can be further learned from Table 2 that, no sequence error occurs before the BEIR multicast flow 1' leaves the node 8, but a sequence error occurs after the BEIR multicast flow 1' enters the node 6, and a sequence error rate is 0.7%, indicating that a sequence error may occur on the BEIR multicast flow 1' between the node 8 and the node 6. Subsequently, a link between the node 8 and the node 6 may be further checked.

In this embodiment of this application, the controller needs to send a flow-based detection instruction to only the ingress node, and does not need to send the flow-based detection instruction to another network device. After receiving the detection instruction, the ingress node includes the first identifier in a BIER packet corresponding to a multicast address carried in the detection instruction, so that the network device forwarding the BIER packet detects, based on the first identifier, a BIER multicast packet corresponding to the BIER packet. In this way, on the premise of detecting the BIER multicast packet, detection deployment efficiency is improved, management bandwidth resources are saved, and network management efficiency is improved.

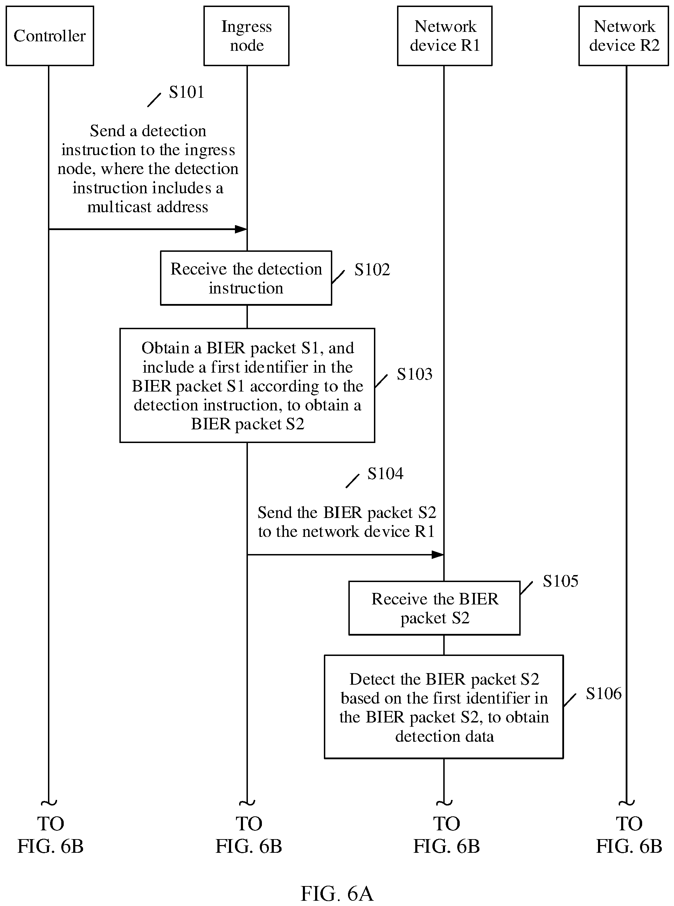

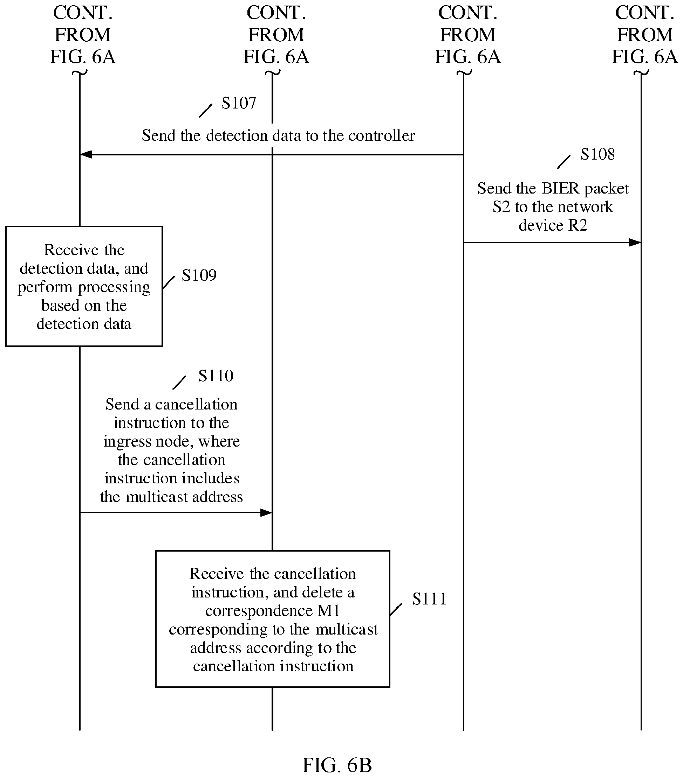

In addition, in this embodiment of this application, the controller may further send a cancellation instruction to the ingress node, to cancel monitoring performed by each network device on the BIER multicast packet. Specifically, referring to FIG. 6A and FIG. 6B, the multicast packet detection method provided in the embodiments of this application may further include the following steps.

S110: The controller sends a cancellation instruction to the ingress node, where the cancellation instruction includes the multicast address.

S111: The ingress node receives the cancellation instruction, and deletes, according to the cancellation instruction, the correspondence M1 corresponding to the multicast address.

After the ingress node deletes the correspondence M1 corresponding to the cancellation instruction, the ingress node does not include the first identifier in the BIER multicast packet corresponding to the correspondence M1. In this case, the ingress node does not need to detect the BIER multicast packet, and another network device that forwards the BIER multicast packet does not need to detect the BIER multicast packet either. Compared with a conventional manner, in this embodiment of this application, the controller needs to send the cancellation instruction to only the ingress node, and does not need to send the cancellation instruction to all network devices. Therefore, on the premise of ensuring that detection on the BIER multicast packet is canceled, detection cancellation deployment efficiency is improved, bandwidth resources are saved, and network management efficiency is improved.

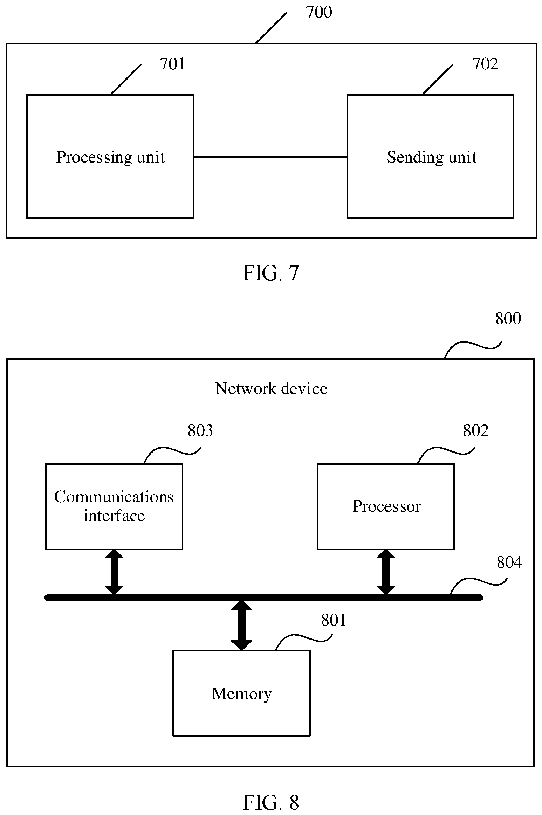

FIG. 7 provides a possible schematic structural diagram of the network device in the foregoing embodiments. The network device 700 may implement functions of the ingress node or the network device R1 in the embodiments shown in FIG. 2 and FIG. 6A and FIG. 6B. For example, the network device may perform S102, S103, and S104 in FIG. 2 or FIG. 6A and FIG. 6B, or perform S105, S106, and S107 in FIG. 2 or FIG. 6A and FIG. 6B, or perform S111 in FIG. 6A and FIG. 6B. For functions of each unit of the network device 700, refer to the descriptions in the foregoing method steps.

Referring to FIG. 7, the network device 700 includes a processing unit 701 and a sending unit 702. The processing unit 701 is configured to obtain a first bit index explicit replication BIER packet, where the first BIER packet includes a first identifier, and the first identifier is used to indicate to detect the first BIER packet. The processing unit 701 is further configured to detect the first BIER packet based on the first identifier, to obtain detection data. The sending unit 702 is configured to send the detection data to a controller.

In an example, the network device 700 is an ingress node of a BIER network.

The network device 700 further includes a receiving unit, configured to receive a detection instruction from the controller, where the detection instruction includes a multicast flow identifier, and the detection instruction is used to instruct the ingress node to include the first identifier in a second BIER packet that carries the multicast flow identifier.

The processing unit 701 is further configured to add the first identifier to the second BIER packet according to the detection instruction, to obtain the first BIER packet.

In an example, the processing unit 701 is further configured to: after the detection instruction is received from the controller, generate a first correspondence, where the first correspondence is a correspondence between the multicast flow identifier and first indication information. The including the first identifier in the second BIER packet according to the detection instruction, to obtain the first BIER packet includes: obtaining the second BIER packet, and obtaining the first indication information based on the multicast flow identifier in the second BIER packet and the first correspondence, where the first indication information is used to indicate to include the first identifier in the second BIER packet; and including the first identifier in the second BIER packet based on the first indication information, to obtain the first BIER packet.

In an example, the processing unit is specifically configured to: obtain, based on the first identifier, information about an interface for transmitting the first BIER packet; and sending the information about the interface to the controller.

In an example, the first BIER packet further includes a sequence number. The processing unit is specifically configured to: obtain the sequence number of the first BIER packet based on the first identifier, and obtain, based on the sequence number, packet loss information or sequence error information of a multicast flow to which the first BIER packet belongs.

In an example, the first identifier is carried in a first field in the first BIER packet.

In an example, the first field is an operation, administration, and maintenance field or a reserved field.

In an example, the first BIER packet further includes a second field, and a value of the second field indicates that the first field carries the first identifier.

The processing unit 701 is further configured to obtain the first identifier in the first field based on the second field.

In an example, the second field is a protocol field or a version field.

In an example, the processing unit 701 is further configured to: obtain characteristic information of the first BIER packet based on the first identifier; and generate a third correspondence based on the characteristic information of the first BIER packet, where the third correspondence is a correspondence between the characteristic information and second indication information, and the second indication information is used to indicate to detect a BIER packet corresponding to the characteristic information.

In an example, the processing unit 701 is further configured to: obtain a third BIER packet; obtain the second indication information based on characteristic information of the third BIER packet and the third correspondence; and detect the third BIER packet based on the second indication information.

It should be noted that, in the embodiments of this application, division into units is an example, and is merely logical function division. During actual implementation, another division manner may be used. Functional units in the embodiments of this application may be integrated into one processing unit 701, or each of the units may exist alone physically, or two or more units are integrated into one unit. For example, in the foregoing embodiment, the receiving unit and the sending unit may be a same unit or different units. The integrated unit may be implemented in a form of hardware, or may be implemented in a form of a software functional unit.

FIG. 8 is a schematic structural diagram of a network device according to an embodiment of this application. The network device 800 includes a processor 802, a communications interface 803, a memory 801, and a bus 804. The communications interface 803, the processor 802, and the memory 801 are connected to each other by using the bus 1104. The bus 804 may be a peripheral component interconnect (Peripheral Component Interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 8, but this does not mean that there is only one bus or only one type of bus. The network device 800 may implement functions of the network device in the embodiments shown in FIG. 2 and FIG. 6A and FIG. 6B. The processor 802 and the communications interface 803 may perform corresponding functions of the network device in the foregoing method examples. The communications interface 803 is configured to support the network device 800 in performing S102 and S104 in FIG. 2 or FIG. 6A and FIG. 6B, or performing S105 and S107 in FIG. 2 or FIG. 6A and FIG. 6B. The processor 802 is configured to support the network device 800 in performing S103 in FIG. 2 or FIG. 6A and FIG. 6B, or performing S106 in FIG. 2 or FIG. 6A and FIG. 6B, or performing S111 in FIG. 6A and FIG. 6B. The memory 801 is configured to store program code and data of the network device 800.

The following describes each component of the controller in detail with reference to FIG. 7.

The memory 801 may be a volatile memory (volatile memory), for example, a random access memory (random-access memory, RAM); or a non-volatile memory (non-volatile memory), for example, a read-only memory (read-only memory, ROM), a flash memory (flash memory), a hard disk (hard disk drive, HDD), or a solid-state drive (solid-state drive, SSD); or a combination of the foregoing types of memories, configured to store program code that can implement the method in this application, a configuration file of a network device in a TSN domain, or other content.

The processor 802 is a control center of the controller, and may be a central processing unit (central processing unit, CPU), or may be an application-specific integrated circuit (application specific integrated circuit, ASIC), or one or more integrated circuits configured to implement the embodiments of this application, for example, one or more digital signal processors (digital signal processor, DSP), or one or more field programmable gate arrays (field programmable gate array, FPGA).

The communications interface 803 is configured to communicate with a network device, for example, to obtain an end-to-end service requirement delay of a data flow, a network device transmission delay on a forwarding path of the data flow, and a link transmission delay on the forwarding path. For example, the service requirement delay of the data flow may be obtained by using an MRP packet, an LRP packet, a NETCONF packet, a NETCONF or RESTCONF packet, or a management information base packet. The communications interface 803 may be an Ethernet interface (Ethernet) interface, a fast Ethernet (Fast Ethernet, FE) interface, or a gigabit Ethernet (Gigabit Ethernet, GE) interface.

In an example, the processor 802 is configured to obtain a first bit index explicit replication BIER packet, where the first BIER packet includes a first identifier, and the first identifier is used to indicate to detect the first BIER packet. The processor 802 is further configured to detect the first BIER packet based on the first identifier, to obtain detection data. The communications interface 803 is configured to send the detection data to the controller.

In an example, the network device 800 is an ingress node of a BIER network.

The network device 800 further includes a receiving unit, configured to receive a detection instruction from the controller, where the detection instruction includes a multicast flow identifier, and the detection instruction is used to instruct the ingress node to include the first identifier in a second BIER packet that carries the multicast flow identifier.

The processor 802 is further configured to add the first identifier to the second BIER packet according to the detection instruction, to obtain the first BIER packet.

In an example, the processor 802 is further configured to: after the detection instruction is received from the controller, generate a first correspondence, where the first correspondence is a correspondence between the multicast flow identifier and first indication information. The including the first identifier in the second BIER packet according to the detection instruction, to obtain the first BIER packet includes: obtaining the second BIER packet, and obtaining the first indication information based on the multicast flow identifier in the second BIER packet and the first correspondence, where the first indication information is used to indicate to include the first identifier in the second BIER packet; and including the first identifier in the second BIER packet based on the first indication information, to obtain the first BIER packet.

In an example, the first identifier is carried in a first field in the first BIER packet.

In an example, the first field is an operation, administration, and maintenance field or a reserved field.

In an example, the first BIER packet further includes a second field, and a value of the second field indicates that the first field carries the first identifier.

The processor 802 is further configured to obtain the first identifier in the first field based on the second field.

In an example, the second field is a protocol field or a version field.

In an example, the processor 802 is further configured to: obtain characteristic information of the first BIER packet based on the first identifier; and generate a third correspondence based on the characteristic information of the first BIER packet, where the third correspondence is a correspondence between the characteristic information and second indication information, and the second indication information is used to indicate to detect a BIER packet corresponding to the characteristic information.

In an example, the processor 802 is further configured to: obtain a third BIER packet; obtain the second indication information based on characteristic information of the third BIER packet and the third correspondence; and detect the third BIER packet based on the second indication information.

For a specific execution process, refer to detailed descriptions of corresponding steps in the embodiments shown in FIG. 2 and FIG. 6A and FIG. 6B. Details are not described herein again.

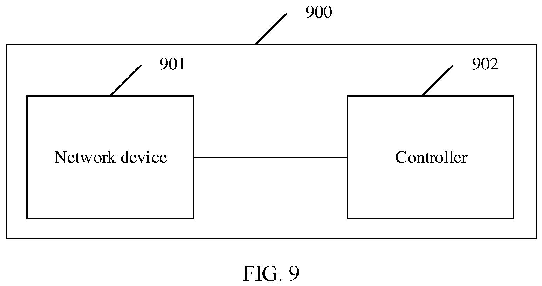

As shown in FIG. 9, an embodiment of this application further provides a multicast packet detection system 900, including a network device 901 and a controller 902. The system 900 is configured to implement the multicast packet detection method in the foregoing method embodiments. The network device 901 may implement a function of the ingress node or the network device R1 in the embodiment shown in FIG. 2 or FIG. 6A and FIG. 6B, and the controller 902 may implement a function of the controller in the embodiment shown in FIG. 2 or FIG. 6A and FIG. 6B. For example, the network device 901 is configured to obtain a first bit index explicit replication BIER packet. The first BIER packet includes a first identifier. The first identifier is used to indicate to detect the first BIER packet. The network device is further configured to: detect the first BIER packet based on the first identifier, to obtain detection data, and send the detection data to the controller 902. The controller 902 is configured to: receive the detection data, and perform processing based on the detection data. For a specific execution process, refer to detailed descriptions of corresponding steps in the embodiment shown in FIG. 2 or FIG. 6A and FIG. 6B. Details are not described herein again.

It should be noted that any apparatus embodiment described above is merely an example. The units described as separate parts may or may not be physically separate, and parts displayed as units may or may not be physical units, may be located in one position, or may be distributed on a plurality of network units. Some or all of modules may be selected according to actual requirements to achieve the objectives of the solutions of the embodiments. In addition, in the accompanying drawings of the embodiments of the first network node or the control device provided in this application, connection relationships between the modules indicate that the modules have communication connections with each other, and the communication connection may be specifically implemented as one or more communications buses or signal lines. A person of ordinary skill in the art may understand and implement the embodiments of this application without creative efforts.

Methods or algorithm steps described in combination with the content disclosed in the embodiments of this application may be implemented by hardware, or may be implemented by a processor by executing software instructions. The software instruction may include a corresponding software module. The software module may be stored in a random access memory (random access memory, RAM), a flash memory, a read-only memory (read only memory, ROM), an erasable programmable read-only memory (erasable programmable ROM, EPROM), an electrically erasable programmable read-only memory (electrically EPROM, EEPROM), a hard disk, a removable hard disk, a compact disc, or any other form of storage medium well-known in the art. A storage medium used as an example is coupled to a processor, so that the processor can read information from the storage medium or write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When this application is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and benefits of this application are further described in detail in the foregoing specific embodiments. It should be understood that the foregoing descriptions are merely specific embodiments of this application, but are not intended to limit the protection scope of this application. Any modification, equivalent replacement or improvement made based on technical solutions of this application shall fall within the protection scope of this application.

**Claims**

1. A multicast packet detection method, wherein the method comprises:

obtaining, by a network device, a first bit index explicit replication BIER packet, wherein the first BIER packet comprises a first identifier, and the first identifier is used to indicate to detect the first BIER packet;

detecting, by the network device, the first BIER packet based on the first identifier, to obtain detection data; and

sending, by the network device, the detection data to a controller.

2. The method according to claim 1, wherein the network device is an ingress node of a BIER network; and the method further comprises:

receiving, by the ingress node, a detection instruction from the controller, wherein the detection instruction comprises a multicast flow identifier, and the detection instruction is used to instruct the ingress node to include the first identifier in a second BIER packet that carries the multicast flow identifier; and

adding, by the ingress node, the first identifier to the second BIER packet according to the detection instruction, to obtain the first BIER packet.

3. The method according to claim 2, wherein after the receiving, by the ingress node, a detection instruction from the controller, the method further comprises:

generating, by the ingress node, a first correspondence, wherein the first correspondence is a correspondence between the multicast flow identifier and first indication information; and

the including, by the ingress node, the first identifier in the second BIER packet according to the detection instruction, to obtain the first BIER packet comprises:

obtaining, by the ingress node, the second BIER packet;

obtaining, by the ingress node, the first indication information based on the multicast flow identifier in the second BIER packet and the first correspondence, wherein the first indication information is used to indicate to include the first identifier in the second BIER packet; and

including, by the ingress node, the first identifier in the second BIER packet based on the first indication information, to obtain the first BIER packet.

4. The method according to any one of claims 1 to 3, wherein the detecting, by the network device, the first BIER packet based on the first identifier comprises:

obtaining, by the network device based on the first identifier, information about an interface for transmitting the first BIER packet; and

sending, by the network device, the information about the interface to the controller.

5. The method according to any one of claims 1 to 3, wherein the first BIER packet further comprises a sequence number; and

the detecting, by the network device, the first BIER packet based on the first identifier comprises:

obtaining, by the network device, the sequence number of the first BIER packet based on the first identifier; and

obtaining, by the network device based on the sequence number, packet loss information or sequence error information of a multicast flow to which the first BIER packet belongs.

6. The method according to any one of claims 1 to 5, wherein the first identifier is carried in a first field in the first BIER packet.

7. The method according to claim 6, wherein the first field is an operation, administration, and maintenance field or a reserved field.

8. The method according to claim 6 or 7, wherein the first BIER packet further comprises a second field, and a value of the second field indicates that the first field carries the first identifier; and

the method further comprises:

obtaining, by the network device, the first identifier in the first field based on the second field.

9. The method according to claim 8, wherein the second field is a protocol field or a version field.

10. The method according to claim 1, wherein the method further comprises:

obtaining, by the network device, characteristic information of the first BIER packet based on the first identifier;

and

generating, by the network device, a third correspondence based on the characteristic information of the first BIER packet, wherein the third correspondence is a correspondence between the characteristic information and second indication information, and the second indication information is used to indicate to detect a BIER packet corresponding to the characteristic information.

11. The method according to claim 10, wherein the method further comprises:

obtaining, by the network device, a third BIER packet;
obtaining, by the network device, the second indication information based on characteristic information of the third BIER packet and the third correspondence; and
detecting, by the network device, the third BIER packet based on the second indication information.

12. A network device, wherein the network device comprises:

a processing unit, configured to obtain a first bit index explicit replication BIER packet, wherein the first BIER packet comprises a first identifier, and the first identifier is used to indicate to detect the first BIER packet, wherein the processing unit is further configured to detect the first BIER packet based on the first identifier, to obtain detection data; and
a sending unit, configured to send the detection data to a controller.

13. The network device according to claim 12, wherein the network device is an ingress node of a BIER network; and the network device further comprises:

a receiving unit, configured to receive a detection instruction from the controller, wherein the detection instruction comprises a multicast flow identifier, and the detection instruction is used to instruct the ingress node to include the first identifier in a second BIER packet that carries the multicast flow identifier; and
the processing unit is further configured to add the first identifier to the second BIER packet according to the detection instruction, to obtain the first BIER packet.

14. The network device according to claim 13, wherein

the processing unit is further configured to: generate a first correspondence after receiving the detection instruction from the controller, wherein the first correspondence is a correspondence between the multicast flow identifier and first indication information;
the processing unit is specifically configured to: obtain the second BIER packet, and obtain the first indication information based on the multicast flow identifier in the second BIER packet and the first correspondence, wherein the first indication information is used to indicate to include the first identifier in the second BIER packet; and
the processing unit is further configured to include the first identifier in the second BIER packet based on the first indication information, to obtain the first BIER packet.

15. The network device according to any one of claims 12 to 14, wherein

the processing unit is specifically configured to obtain, based on the first identifier, information about an interface for transmitting the first BIER packet; and
the sending unit is further configured to send the information about the interface to the controller.

16. The network device according to any one of claims 12 to 15, wherein the first BIER packet further comprises a sequence number; and
the processing unit is specifically configured to: obtain the sequence number of the first BIER packet based on the first identifier, and obtain, based on the sequence number, packet loss information or sequence error information of a multicast flow to which the first BIER packet belongs.

17. The network device according to any one of claims 12 to 16, wherein the first identifier is carried in a first field in the first BIER packet.

18. The network device according to claim 17, wherein the first field is an operation, administration, and maintenance field or a reserved field.

19. The network device according to claim 17 or 18, wherein the first BIER packet further comprises a second field, and a value of the second field indicates that the first field carries the first identifier; and
the processing unit is further configured to obtain the first identifier in the first field based on the second field.

20. The network device according to claim 19, wherein the second field is a protocol field or a version field.

21. The network device according to any one of claims 12 to 20, wherein
the processing unit is further configured to: obtain characteristic information of the first BIER packet based on the first identifier; and generate a third correspondence based on the characteristic information of the first BIER packet, wherein the third correspondence is a correspondence between the characteristic information and second indication information, and the second indication information is used to indicate to detect a BIER packet corresponding to the characteristic information.

22. The network device according to claim 21, wherein
the processing unit is further configured to: obtain a third BIER packet; obtain the second indication information based on characteristic information of the third BIER packet and the third correspondence; and detect the third BIER packet based on the second indication information.

23. A computer-readable storage medium, comprising instructions, wherein when the instructions are executed on a computer, the computer is enabled to perform the method according to any one of claims 1 to 11.

FIG. 1

Controller | Ingress node | Network device R1 | Network device R2

S101

Send a detection instruction to the ingress node, where the detection instruction includes a multicast address

Receive the detection instruction  S102

Obtain a BIER packet S1, and include a first identifier in the BIER packet S1 according to the detection instruction, to obtain a BIER packet S2  S103

S104

Send the BIER packet S2 to the network device R1

Receive the BIER packet S2  S105

Detect the BIER packet S2 based on the first identifier in the BIER packet S2, to obtain detection data  S106

S107

Send the detection data to the controller

S108

Send the BIER packet S2 to the network device R2

Receive the detection data, and perform processing based on the detection data  S109

FIG. 2

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|                    BIFT-ID                    |  TC  |S|   TTL   |
+-+-+-+-+-+-+-+-+-+-+-+-+-+-+-+-+-+-+-+-+-+-+-+-+-+-+-+-+-+-+-+-+
|  Nibble  |  Ver  |  BSL  |               Entropy                |
+-+-+-+-+-+-+-+-+-+-+-+-+-+-+-+-+-+-+-+-+-+-+-+-+-+-+-+-+-+-+-+-+
|OAM| Rsv |   DSCP    |    Proto    |             BFIR-ID           |
+-+-+-+-+-+-+-+-+-+-+-+-+-+-+-+-+-+-+-+-+-+-+-+-+-+-+-+-+-+-+-+-+
|                    Bit string (first 32 bits)                  ~
+-+-+-+-+-+-+-+-+-+-+-+-+-+-+-+-+-+-+-+-+-+-+-+-+-+-+-+-+-+-+-+-+
~                                                               ~
+-+-+-+-+-+-+-+-+-+-+-+-+-+-+-+-+-+-+-+-+-+-+-+-+-+-+-+-+-+-+-+-+
~                    Bit string (last 32 bits)                  |
+-+-+-+-+-+-+-+-+-+-+-+-+-+-+-+-+-+-+-+-+-+-+-+-+-+-+-+-+-+-+-+-+
```

FIG. 3

FIG. 4

FIG. 5

| Controller | Ingress node | Network device R1 | Network device R2 |

/ S101

Send a detection instruction to the ingress node, where the detection instruction includes a multicast address

Receive the detection instruction  / S102

Obtain a BIER packet S1, and include a first identifier in the BIER packet S1 according to the detection instruction, to obtain a BIER packet S2  / S103

/ S104

Send the BIER packet S2 to the network device R1

Receive the BIER packet S2  / S105

Detect the BIER packet S2 based on the first identifier in the BIER packet S2, to obtain detection data  / S106

TO FIG. 6B          TO FIG. 6B          TO FIG. 6B          TO FIG. 6B

FIG. 6A

CONT.
FROM
FIG. 6A

CONT.
FROM
FIG. 6A

CONT.
FROM
FIG. 6A

CONT.
FROM
FIG. 6A

S107

Send the detection data to the controller

S108

Send the BIER packet
S2 to the network
device R2

Receive the
detection data, and
perform processing
based on the
detection data

S109

S110

Send a cancellation
instruction to the
ingress node, where
the cancellation
instruction includes
the multicast address

Receive the cancellation
instruction, and delete a
correspondence M1
corresponding to the multicast
address according to the
cancellation instruction

S111

FIG. 6B

700

701

Processing unit

702

Sending unit

FIG. 7

800

Network device

803

Communications interface

802

Processor

804

801

Memory

FIG. 8

900

901

902

Network device

Controller

FIG. 9

## INTERNATIONAL SEARCH REPORT

| International application No. |
| --- |
| **PCT/CN2020/119667** |

**A.  CLASSIFICATION OF SUBJECT MATTER**

H04L 12/741(2013.01)i

According to International Patent Classification (IPC) or to both national classification and IPC

**B.  FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, EPODOC, WPI: 比特位索引显示复制, 组播, 多播, 报文, 分组, 检测, 校验, 标识, 标志, 标记, 字段, 位, 比特, BIER, bit indexed explicit replication, multicast, packet, message, detect, check, identification, mark, field, bit

**C.  DOCUMENTS CONSIDERED TO BE RELEVANT**

| Category* | Citation of document, with indication, where appropriate, of the relevant passages | Relevant to claim No. |
| --- | --- | --- |
| A | CN 109921987 A (ZTE CORPORATION) 21 June 2019 (2019-06-21) description, paragraphs 68-86 | 1-23 |
| A | CN 105812197 A (HUAWEI TECHNOLOGIES CO., LTD.) 27 July 2016 (2016-07-27) entire document | 1-23 |
| A | CN 109246017 A (NEW H3C TECHNOLOGIES CO., LTD.) 18 January 2019 (2019-01-18) entire document | 1-23 |
| A | US 2015078380 A1 (CISCO TECHNOLOGY, INC.) 19 March 2015 (2015-03-19) entire document | 1-23 |
| A | US 2015131658 A1 (CISCO TECHNOLOGY, INC.) 14 May 2015 (2015-05-14) entire document | 1-23 |
| A | 喻敬海 等 (YU, Jinghai et al.). "新型多播技术(BIER)及原型系统 (New Multicast Technology (BIER) and Prototype System)" 电信科学 (Telecommunications Science), No. 11, 30 November 2019 (2019-11-30), ISSN: 1000-0801, entire document | 1-23 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 December 2020** | **31 December 2020** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/119667**

| Patent document cited in search report | | | Publication date (day/month/year) | Patent family member(s) | | | Publication date (day/month/year) |
|---|---|---|---|---|---|---|---|
| CN | 109921987 | A | 21 June 2019 | WO | 2019114437 | A1 | 20 June 2019 |
| CN | 105812197 | A | 27 July 2016 | WO | 2016107444 | A1 | 07 July 2016 |
| | | | | KR | 20170102175 | A | 07 September 2017 |
| | | | | JP | 2018500842 | A | 11 January 2018 |
| | | | | US | 2019334798 | A1 | 31 October 2019 |
| | | | | KR | 20200039841 | A | 16 April 2020 |
| | | | | EP | 3242441 | A1 | 08 November 2017 |
| | | | | JP | 2019205171 | A | 28 November 2019 |
| | | | | US | 2017302546 | A1 | 19 October 2017 |
| | | | | KR | 20190099344 | A | 26 August 2019 |
| CN | 109246017 | A | 18 January 2019 | None | | | |
| US | 2015078380 | A1 | 19 March 2015 | US | 2019215176 | A1 | 11 July 2019 |
| US | 2015131658 | A1 | 14 May 2015 | EP | 2899933 | A1 | 29 July 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010075317